# EUROPEAN PATENT SPECIFICATION

(11) **EP 1 820 726 B1**
(45) Date of publication and mention of the grant of the patent: **14.09.2011**
(21) Application number: 06003423.8
(22) Date of filing: 20.02.2006
(51) Int. Cl.: B62M 3/00

(54) **Bicycle bottom bracket assembly**
Fahrradtretlager
Pédalier de bicyclette

(43) Date of publication of application: 22.08.2007
(73) Proprietor: Campagnolo S.r.l., 36100 Vicenza (VI) (IT)
(72) Inventor: Dal Pra', Giuseppe, 36010 Zané (Vicenza) (IT)
(74) Representative: Castiglia, Paolo

(56) References cited:
- EP-A- 1 342 656
- EP-A2- 1 612 135
- WO-A-02/32751
- DE-A1- 2 359 437
- DE-B- 1 257 613
- DE-U1- 29 715 373
- FR-A- 863 610
- US-A1- 2002 081 052
- US-A1- 2002 096 015
- US-A1- 2005 011 304
- US-A1- 2005 040 699
- US-A1- 2005 081 678
- US-B1- 6 564 675

## Description

The present invention relates to a bicycle bottom bracket assembly.

As known, a bicycle bottom bracket assembly comprises a shaft and two pedal cranks associated with the opposite ends of the shaft. The shaft can be made in a distinct piece from the pedal cranks or can be made in a single piece with one of the two pedal cranks.

The component of the bicycle bottom bracket consisting of a pedal crank and a shaft coupled together or made in a single piece is typically identified with the expression: crank assembly.

The bottom bracket assembly is mounted on the bicycle by housing the shaft in a housing box suitably provided in the bicycle frame. The rotation of the bottom bracket with respect to the housing box is achieved by inserting a pair of rolling bearings onto the shaft. Each bearing is positioned on the shaft at a respective shaft body portion adjacent to the pedal crank. When the bottom bracket assembly is mounted on the bicycle frame, each bearing is operatively arranged between the shaft and the housing box suitably provided in the frame.

Typically, the mounting system of the bearings on the shaft is studied so that the bearings, once mounted on the shaft, can provide a precise reference for the correct positioning of the bottom bracket assembly in the housing box provided in the bicycle frame and can allow possible errors of size of such a box and/or possible dilations of the shaft to be recovered without compromising the correct positioning of the bottom bracket with respect to the bicycle frame.

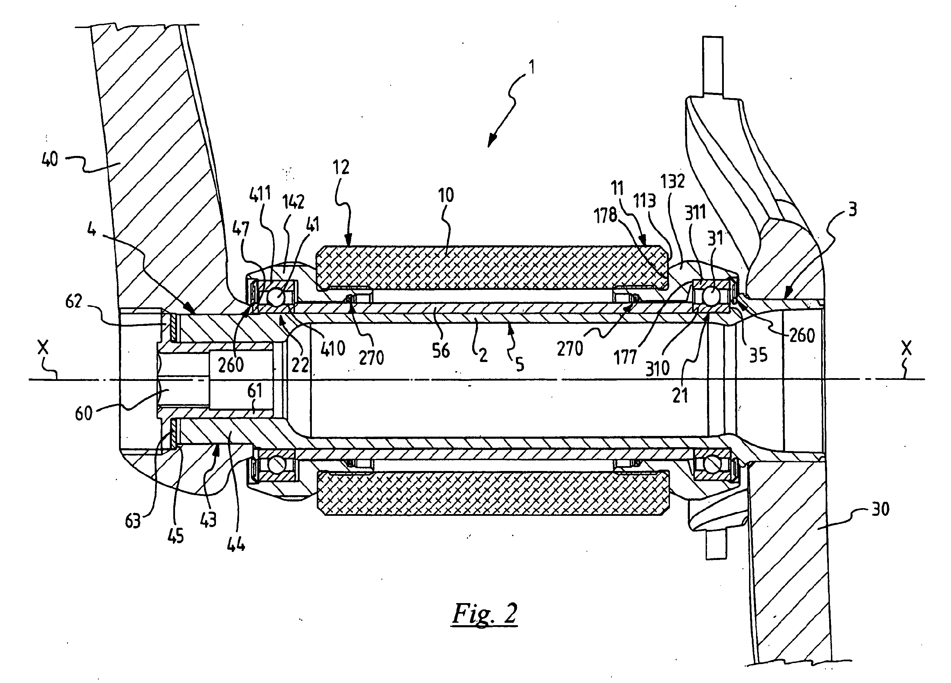

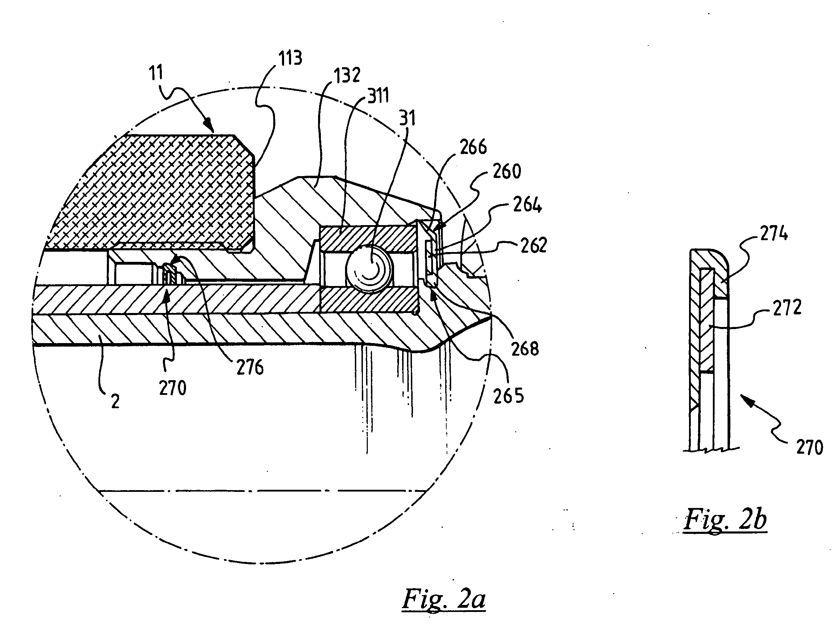

US 6,116,114 describes a bottom bracket assembly comprising two crank assemblies, each comprising a pedal crank integrally formed with a respective half-shaft. As shown in figure 2, the two half-shafts couple telescopically with each other and lock the inner ring of a bearing (the right bearing) between them. The inner ring of the other bearing (the left bearing), on the other hand, is free to translate axially with respect to the shaft. The axial translation of the outer rings of both of the bearings is prevented towards the inside of the box by respective adapters and is free towards the outside. In this bottom bracket assembly, the bearing with the locked inner ring (the right bearing) provides the reference for the mounting of the bottom bracket assembly in the housing box of the bicycle frame, whereas the bearing with the inner ring free to translate (the left bearing) allows the recovery of possible errors in size of the housing box and of possible dilations of the shaft.

The Applicant has found a series of drawbacks in the bottom bracket assembly described in the aforementioned patent.

A first drawback is correlated to the difficulty in mounting the bottom bracket assembly on the bicycle frame. Such mounting indeed provides for the insertion of the left bearing onto the left half-shaft before such a half-shaft is inserted into the housing box; the left bearing is then translated onto the half-shaft until it goes into abutment against the respective adapter after the half-shaft has been inserted into the housing box. The Applicant has however found that the movement of the bearing with respect to the half-shaft is not at all simple, both because it is necessary to exert a substantial force to modify the pressure coupling between bearing and half-shaft, both generally made from steel, and because the access area to the left bearing is extremely small, given that in such a mounting step the assembly is practically almost totally assembled.

A second drawback is correlated to the difficulty of telescopically coupling the two half-shafts in the housing box of the bicycle frame. The coupling between the two crank assemblies is indeed, typically, a high-precision coupling and therefore the insertion of the two half-shafts into each other inside the housing box, i.e. without the possibility of having a visual reference for the operator, can only be achieved by attempts and is long and laborious.

A third drawback is correlated to the poor reliability of the bottom bracket assembly once mounted in the housing box of the bicycle frame. Indeed, the Applicant has found that an axial load slightly above the load normally foreseen during pedalling is sufficient to cause the movement of the shaft, and therefore of the pedal cranks with respect to the middle plane of the frame of bicycles, thus making the bicycle unusable.

A fourth drawback is correlated to the need to provide for a forced coupling between the inner ring of a bearing and the shaft to lock such a bearing in axial position on the shaft. Such a type of coupling indeed involves complications in the mounting operations of the bearing on the shaft, in addition to undesired stresses on the shaft itself in operation.

DE 29715373U1 discloses a bicycle bottom bracket assembly provided with the features disclosed in the preamble of claim 1.

The Applicant has identified a new system for mounting the bearings onto the shaft that is simpler, more practical and reliable than the one described in the document of the prior art cited above.

The present invention therefore relates, in a first aspect thereof, to a bicycle bottom bracket assembly, according to claim 1.

Advantageously, in the bottom bracket assembly of the present invention the bearings are both locked with respect to the shaft so as not to compromise the correct positioning of the pedal cranks with respect to the middle plane of the bicycle frame and the freedom of movement of the second ring of at least one bearing allows possible errors, even of substantial degree, in size of the housing box and/or dilations of the shaft to be recovered. Indeed, the free ring makes the position of the bearing with respect to the shaft independent of the position of the bearing with respect to the adapter. If it is then considered the fact that in general the adapters are made from light material, like aluminium alloy, and the fact that in general their walls are thin and therefore elastic, it follows that the translation of the ring that is free with respect to the adapter is easier and requires less effort with respect to what is required in the solution of the prior art described above.

Preferably, the first ring is the inner ring of the bearing and the second ring is the outer ring of the bearing.

Preferably, the bottom bracket of the present invention further comprises:
- a second pedal crank coupled with said second end portion of said shaft;
wherein at least one of said first and second pedal cranks is axially mobile with respect to said shaft along said predetermined direction and can be locked on the respective end portion of shaft in a predetermined axial position in which said at least one of said first and second pedal cranks exerts an axial thrust on at least one of said first rings along said predetermined direction to lock at least one of said first and second bearings in axial position with respect to said shaft.

Advantageously, in the bottom bracket assembly of the present invention the locking of at least one bearing in the desired axial position on the shaft is achieved by simply exploiting the thrusting action exerted on said at least one bearing by the pedal crank that is axially mobile along the respective end portion of shaft and lockable here in a predetermined axial position. The mounting of such a bearing on the shaft is therefore quick and easy since it simply requires the coupling of the bearing on the shaft and the axial movement of the pedal crank with respect to the shaft to lock the bearing in position on the shaft. Unlike the bottom bracket assembly described in the prior art document cited above, the bottom bracket assembly of the present invention does not therefore require any forced coupling between bearing and shaft. The shaft of the assembly of the present invention is therefore, advantageously, less stressed than the shaft of the assembly described in the prior art document cited above.

Even more advantageously, also the mounting of the bottom bracket assembly in the housing box suitably provided in the bicycle frame is quick and easy thanks to the fact that the coupling between shaft and pedal crank can be seen by the operator since it is outside the housing box provided in the bicycle frame.

Said first pedal crank is coupled with said first end portion of shaft through a first shape coupling that allows a relative movement between said first pedal crank and said first end portion of shaft along said predetermined direction. Advantageously, the shape coupling between bearing and shaft involves less stresses on the shaft than the forced coupling of the prior art.

In a first preferred embodiment of the bottom bracket assembly of the present invention, said first shape coupling is a grooved coupling, for example like the one described in European patent application n° 05425377 to the same Applicant, incorporated here by reference with respect to the part in which such a type of coupling is described. Preferably, the grooved coupling is of the type with rectilinear generatrices parallel to the axis of the shaft and of the coupling hole of the pedal crank, as described below.

In a second preferred embodiment of the bottom bracket assembly of the present invention, said first shape coupling is a coupling with square faces.

Said first locking means comprise a first abutment element fixed with respect to the shaft and acting on at least one of said first rings on the opposite side to said first pedal crank to lock said at least one of said first rings in axial position on said shaft. Advantageously, the abutment element provides a counteraction to the axial thrust exerted on the bearing by the pedal crank which is movable along the respective end portion of shaft, thus ensuring the locking in position of such a bearing on the shaft.

In particular, said first abutment element is defined by a shoulder integrally formed on said shaft. Advantageously, the counteraction to the axial thrust of the pedal crank on the bearing is obtained without the need to use additional elements such as elastic rings or similar.

Preferably, said first locking means further comprise a first spacer inserted on said shaft between said first and second bearing and acting in abutment on the first rings of said first and second bearing and wherein said first abutment element is defined at said second end portion of shaft and is active on the first ring of said second bearing on the opposite side to said first spacer to lock the first rings of said first and second bearings in axial position on said shaft. Advantageously, the locking in position of both of the bearings on the shaft can be achieved through the axial thrust exerted on both bearings by a single pedal crank that can be moved axially on the respective end portion of shaft. Moreover, the spacer arranged between the two bearings covers outwardly the central portion of the shaft, which is thus stiffened against the bending stress to which the shaft is typically subjected during pedalling.

In the aforementioned preferred embodiments of the bottom bracket assembly of the present invention, said second pedal crank can be integrally formed with said shaft, or coupled with said shaft through a forced interference coupling, or even coupled with said shaft through a second shape coupling identical to the first coupling described above with reference to the coupling between the first pedal crank and the respective end portion of shaft, i.e. a coupling that allows a relative movement between said second pedal crank and said second end portion of shaft along said predetermined direction.

In a particular embodiment in which the second pedal crank is coupled with the second end portion of shaft through a shape coupling, said first abutment element is defined at said first end portion of shaft and is active on the first ring of said first bearing on the opposite side to said first pedal crank to lock said first bearing in axial position on said shaft and said first locking means also comprise a second abutment element formed on said shaft at said second end portion of shaft and active on the first ring of said second bearing on the opposite side to said second pedal crank to lock said second bearing in axial position on said shaft. In this case, the locking in position of each bearing on the shaft is achieved through the axial thrust exerted on such bearing by a respective pedal crank that can be moved axially on the respective end portion of shaft.

In a first preferred embodiment of the bottom bracket assembly of the present invention, said adapters are adapted to be housed inside said housing box.

Preferably, in this case, the bottom bracket assembly of the present invention comprises second locking means of the second ring of said at least one bearing acting on said second ring to prevent the movement of said second ring in both ways of said predetermined direction. Advantageously, the locking of the second ring of a bearing against the movement in both ways of the predetermined direction prevents axial stresses greater than those normally foreseen during pedalling from being able to move the shaft with respect to the housing box provided in the bicycle frame and provides a precise reference for the mounting of the bottom bracket assembly in the aforementioned box.

More preferably, said second locking means comprise said second abutment surface and a second spacer active in abutment on said second ring on the opposite side to said at least one adapter, said second spacer being thrust against said second ring by the other adapter. Advantageously, the use of a second spacer thrust into abutment against the outer ring of a bearing by the adapter coupled with the other bearing ensures the possibility of achieving the locking of the outer ring of the bearing even in the presence of possible errors in size of the housing box. Indeed, the position of the spacer is not influenced by such errors and nor does it determine the position of the other bearing, which is free to move due to dilations of the shaft.

Preferably, said at least one adapter comprises a flange on which said first abutment surface is defined. Such a flange cooperates with the abutment surface for the outer ring of the bearing locked in position on the shaft to univocally determine the position of the bottom bracket with respect to the housing box suitably provided in the bicycle frame.

In a second preferred embodiment of the bottom bracket assembly of the present invention, said adapters are adapted to be mounted canti-levered on said housing box.

Preferably, in this case, the bottom bracket assembly of the present invention comprises third locking means of the second ring of said at least one bearing acting on said second ring to prevent the movement of said second ring along said predetermined direction towards the inside of said housing box. Advantageously, the locking of the second ring of one of the two bearings in one of the two ways of the predetermined direction provides the reference for the positioning of the bottom bracket in the housing box suitably provided in the bicycle frame, whereas the freedom of movement of the second ring of the other bearing in the two ways of the predetermined direction allows errors in size of the housing box to be recovered.

Preferably, said third locking means comprise said abutment surface for said second ring.

In a further preferred embodiment of the bottom bracket assembly of the present invention, said shaft comprises a central body portion having a diameter greater than that of said first and second end portions. Such a shaft, advantageously, has a high resistance to the bending stresses to which it is subjected during pedalling.

The Applicant has also studied how to simplify the manufacture of the coupling profile of the pedal cranks and of the end portions of the shaft in the case in which the shaft-pedal crank coupling is a shape coupling.

The Applicant has indeed noted that, in bottom bracket assemblies of the prior art, such a type of coupling typically provides for making an axially tapered coupling profile on the end portion of the shaft and in the corresponding coupling hole provided in the body of the pedal crank. The coupling between shaft and pedal crank is thus carried out by fitting the pedal crank onto the end of the shaft and moving it axially with respect to the shaft until it abuts due to the mechanical coupling by interference of the tapered profiles of the shaft and of the pedal crank.

An example of a coupling profile typically used in the shafts and in the pedal cranks of the bottom bracket of the prior art is the known ISIS standard coupling, described for example in "ISIS Drive - The International Spline Interface Standard, ISIS Drive Standard Committee, 2001. Such a coupling provides for making respective grooved coupling profiles having a defined shape and precise size values for crests and grooves on the shaft and on the pedal crank.

In particular, according to the ISIS standard, the end of the shaft and the hole of the pedal crank have a grooved profile slightly tapered in the axial sense (1° of inclination with respect to the axis) so as to make a coupling by interference of conical surfaces.

The Applicant has however found that making the aforementioned tapered profiles, especially in the case of complicated coupling profiles, like for example the grooved ones, is very difficult and expensive, since it is necessary to provide very narrow coupling tolerances to achieve a correct positioning of the pedal crank on the shaft. This obviously affects the manufacturing costs of the aforementioned components.

The invention provides a shaft-pedal crank coupling profile that is more cost-effective and simpler.

Preferably, the mutual coupling profiles of the shaft and of the pedal crank are profiles with rectilinear and parallel generatrices, which are much simpler to make, and therefore more cost-effective, with respect to the tapered profiles currently known. Even more advantageously, the use of profiles with rectilinear and parallel generatrices allows the axial position of the pedal crank with respect to the shaft to be chosen freely, for example making use of spacing washers.

The shaft of the crank assembly mentioned above can be a piece of the shaft of the bottom bracket (which in this case shall consist of two distinct pieces coupled together) or the same shaft of the bottom bracket (which in this case shall consist of a single piece).

Preferably, said coupling profiles are grooved profiles and said coupling elements comprise a plurality of crests and a plurality of grooves defined on said end portion of shaft and in said coupling hole of the pedal crank.

Even more preferably, said crests and grooves are defined by joined curved surfaces, according to what is described in European patent application no. 05425377.8 to the same Applicant. This type of grooved profile is particularly advantageous in cases in which it must be made on components having unidirectional structural fibres, like for example in the case in which the pedal crank is made from composite material, since the absence of sharp edges and deep grooves minimises the possibility of breaking or damaging of the aforementioned unidirectional structural fibres.

Preferably, the grooves formed on the shaft comprise a tapered axially inner portion. This allows a larger abutment surface to be made on the shaft for the bearing or for possible spacer elements arranged between bearing and abutment surface.

Moreover, the Applicant has studied how to manufacture a shaft of a bottom bracket that has a higher strength and at the same time is light.

In the field of racing bicycles there is indeed an increasing need to find a good compromise between structural strength and lightness of the various components of the bicycle. With particular reference to the shaft of bottom brackets, structural strength has always been an extremely limiting factor for obtaining shafts even lighter, since the stresses to which the shaft is subjected are multiple and add to one another.

The prior art has proposed, as optimal shafts for satisfying the need to have a good structural strength and, at the same time, adequate lightness, hollow shafts made from steel.

The competitive level required today, however, requires that the constructive limitations imposed up to now by the prior art be overcome and that shafts with high structural strength and at the same time that are lighter than those conventionally used up to now be manufactured.

The Applicant has devised a shaft that satisfies this need.

An embodiment of a shaft is disclosed in dependent claim 23.

Advantageously, the Applicant has found that such a shaft has a higher strength and at the same time is lighter than conventional single-layer shafts used in the prior art. The higher structural strength is due to the fact that the stratification makes the shaft more elastic and therefore more resistant to fatigue. The greater lightness, on the other hand, is due to the fact that, for the same strength, a two-layer shaft can be manufactured providing a thickness for each layer such that the sum of the thicknesses of the two layers is less than the thickness of the single layer of conventional shafts used in the prior art.

Such a shaft can advantageously be used in the crank assembly and in the bottom bracket assembly described above.

Advantageously, the outer layer of the shaft can act as a spacer for the bearings inserted onto the shaft.

Preferably, said first and at least one second layers are made from the same material. More preferably, said first body is substantially cylindrical and said at least one second layer of material defines at least one second substantially cylindrical body coaxially arranged outside said first body.

The Applicant has also studied a new way of protecting the bearings of a bottom bracket assembly from internal and external agents of the bicycle frame.

Indeed, it is known that the bearings that are used in bottom brackets have already incorporated a protection against external agents, like dust and humidity. However, it is common practice to add further protection to the bottom bracket, given that the bearing's own protection does not always prove sufficient.

A typical example of application of auxiliary protection is described in patent application EP1449760.

In this application a gasket associated with each adapter to insulate the corresponding bearing from the external environment is described.

On the other hand, a protective element is provided to protect the bearing from the humidity coming from inside the bicycle frame, with which the bottom bracket is in communication. The frame can indeed generate condensation or worse be permeable to rain.

The protective element generally consists of a cylindrical sleeve mounted coaxially to the shaft and the free opposite ends thereof have the adapters for supporting the bearings placed over the top thereof. Between the sleeve and the adapters rubber o-rings are arranged to seal their coupling area.

The Applicant has noted that the solution proposed in the patent application cited above has little practicality of mounting, due to the fact that the coupling of the sleeve with the adapters is carried out when the sleeve is already inserted into the box and therefore without the possibility of having a visual reference.

The Applicant has therefore identified a bottom bracket assembly provided with a system for the protection of the bearings from the external and internal agents of the bicycle frame that is easier to install compared to the one of the prior art discussed above.

Advantageously, the assembly of the invention can be at least partially preassembled outside of the housing box provided in the bicycle frame. The positioning of the various components is therefore quick and easy and the assembly of the assembly and its mounting in the housing box provided in the frame is thus made easier.

The aforementioned gaskets are preferably used in the bottom bracket assembly of the present invention described above.

Preferably, said first and second gasket are arranged at opposite sides with respect to said at least one bearing. Such gaskets thus cooperate with the adapter and with the shaft to create a substantially watertight chamber inside which the bearing is contained.

Preferably, said first gasket comprises a first rigid ring coupled with a first annular element made from elastic material. The rigid ring has a support function whereas the elastic annular element (preferably made from rubber) ensures the seal and the insulation.

Preferably, said first annular element comprises a radially outer free end having a diameter slightly smaller than the diameter of the adapter and a radially inner free end in contact with the shaft.

Even more preferably, the radially inner free end of said first annular element is housed in an annular seat formed on the shaft.

In a specific embodiment, said first annular element further comprises an annular projection adapted to cooperate in abutment with a front wall of a pedal crank. In this way, the coupling area between shaft and pedal crank is also protected from the external environment, thus avoiding the possibility of corrosion phenomena starting up in this area.

Preferably, said first annular element comprises, at said radially outer free end, a fin that is placed on top of said first rigid ring and, at said radially inner free end, a curb, said first rigid ring being supported by said curb.

Preferably, said second gasket comprises a second rigid ring coupled with a second annular element in elastic material.

More preferably, said second annular element comprises a radially outer free end in contact with the adapter and a radially inner free end having a diameter slightly larger than the diameter of the shaft.

Even more preferably, the radially outer free end of said second annular element is housed in an annular seat formed on the adapter.

Preferably, said second annular element comprises a sheath that, at a radially outer free end of said second annular element, at least partially covers said second rigid ring.

Further characteristics and advantages of the present invention shall become clearer from the following detailed description of some preferred embodiments thereof, made with reference to the attached drawings. In these drawings:
- figure 1 is a schematic view in longitudinal section of a first embodiment of a bicycle bottom bracket assembly in accordance with the present invention;
- figure 2 is a schematic view in longitudinal section of a second embodiment of a bicycle bottom bracket assembly in accordance with the present invention;
- figure 2a is an enlarged view of a portion of the assembly of figure 2;
- figure 2b is an enlarged view of a detail of the assembly of figure 2;
- figure 3 is a schematic view in longitudinal section of a bicycle bottom bracket assembly not according to the present invention;
- figure 4 is a schematic view in longitudinal section of a bicycle bottom bracket assembly not according to the present invention.

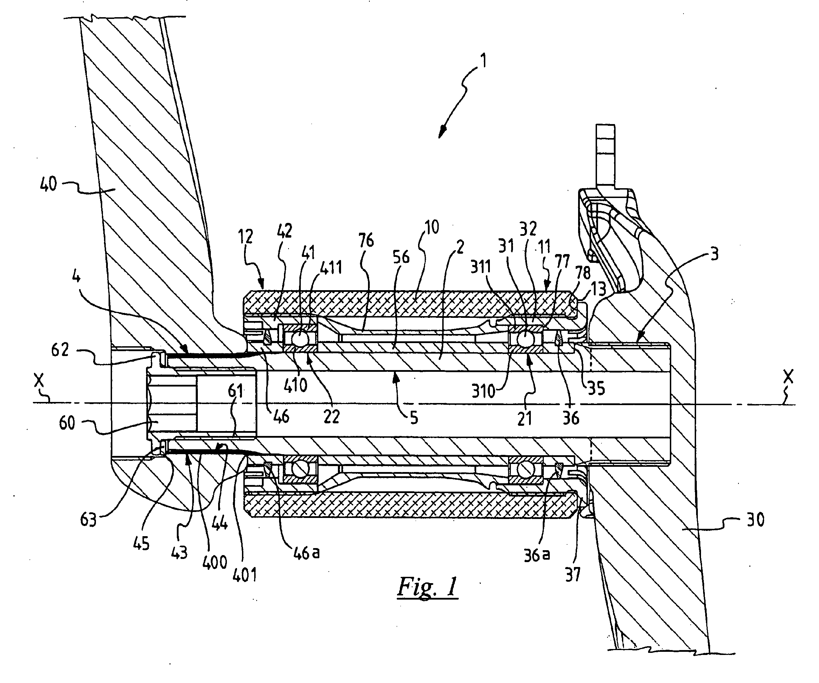

With reference to figure 1, a bicycle bottom bracket assembly in accordance with a first embodiment of the present invention is indicated with 1.

The assembly 1 comprises a shaft 2 having a longitudinal axis X-X extending along a predetermined direction. The shaft 2 comprises opposite end portions 3 and 4, right and left respectively, with which a right pedal crank 30 and a left pedal crank 40 are respectively associated.

The shaft 2 is supported in rotation in a housing box 10 suitably provided in the bicycle frame through the interposition of a right bearing 31 and of a left bearing 41 suitably inserted onto the shaft 2. The box 10 is substantially cylindrical in shape and extends along a longitudinal axis intended to coincide with the axis X-X of the shaft 2 when such a shaft is housed inside the box 10.

In the specific embodiment illustrated in figure 1, the bearings 31 and 41 are ball bearings, but it is possible to use other types of bearings adapted to ensure a relative rotary motion between shaft 2 and box 10, like for example roller bearings.

The bearings 31 and 41 are inserted in a right adapter 32 and in a left adapter 42 respectively. The adapters 32, 42 are screwed inside the box 10 at the opposite free end portions 11 and 12 of such a box 10.

In the assembled configuration thereof, the bearing 31 has an inner ring 310 coupled with a portion 21 of shaft adjacent to the end portion 3 and an outer ring 311 coupled with an inner annular surface of the right adapter 32. Similarly, the bearing 41 has an inner ring 410 coupled with a portion 22 of shaft adjacent to the end portion 4 and an outer ring 411 coupled with an inner annular surface of the left adapter 42.

The left pedal crank 40 is coupled with the left end 4 of the shaft 2 through a shape coupling that allows a movement of the pedal crank 40 with respect to the shaft 2 parallel to the axis X-X of the shaft 2. In the embodiment illustrated in figure 1, such a coupling is a grooved coupling, for example like the one described in European patent application n° 05425377 to the same Applicant. Preferably, as illustrated in figure 1, the grooved coupling is defined, preferably, by forming in the left pedal crank 40 a grooved hole 43 defined by coupling elements 400 (in particular crests and grooves preferably defined by joined curved surfaces) having rectilinear generatrices parallel to the axis X-X of the shaft 2 and, in the left end portion 4 of the shaft 2, a grooved surface 44 matching that of the hole 43. In the hole 43 an abutment element defined by a shoulder 45 is provided.

The grooves formed on the shaft comprise an axially inner portion 401 that has a tapering along the axis X-X. In such a portion, therefore, the depth of the grooves progressively decreases until it becomes zero.

The right pedal crank 30, on the other hand, is associated with the right end portion 3 of the shaft 2 in a permanent manner, for example through forced coupling, through co-moulding or making it integrally formed with the shaft itself. In the example embodiment illustrated in figure 1, a forced coupling with interference of respective grooved profiles is shown.

However, alternative embodiments are foreseen in which the right pedal crank 30 is coupled with the shaft 2 through a coupling that allows a relative movement between the pedal crank 30 and the right end portion 3 of the shaft 2 along a direction parallel to the axis X-X of the shaft. Such a coupling can, for example, be of the type described above with reference to the coupling between the left pedal crank 40 and the left end portion 4 of the shaft 2.

The locking of the left pedal crank 40 on the left end portion 4 of the shaft 2 in a desired axial position is achieved through a screw 60 screwed into a threaded hole 61 made in the left end portion 4 of the shaft 2. The screw 60 is inserted into the hole 43 of the left pedal crank 40 and has a head 62 intended to go into abutment against the shoulder 45 formed in the hole 43 of the left pedal crank 40. Between the shoulder 45 and the head 62 of the screw 60 a washer 63 is arranged to improve the distribution of the tensions between screw 60 and left end portion 4 of the shaft 2.

As an alternative to the grooved coupling between left pedal crank 40 and left end portion 4 of the shaft 2, it is possible to provide a coupling with square faces or a threaded coupling, like the one described in European patent application n° 05026302 to the same Applicant. In any case, the left pedal crank 40, by means of this coupling, must be able to move parallel to the axis X-X of the shaft 2.

Between the right end portion 3 and the end portion 4 of the shaft 2 a central portion 5 of constant diameter is defined. The right end portion 3, on the other hand, is defined on a shaft body portion of greater diameter, so as to form on the shaft 2, at the right end portion 3 thereof, a shoulder 35, adapted to act as an abutment surface (possibly through the interposition of suitable spacers) for the inner ring 310 of the right bearing 31, as shall be described better hereafter.

In the embodiment illustrated in figure 1, between the inner ring 310 of the right bearing 31 and the inner ring 410 of the left bearing 41 a central spacer 56 is arranged. A right spacer 36 is then arranged between the shoulder 35 and the inner ring 310 of the right bearing 31 and a left spacer 46 is arranged between the inner ring 410 of the left bearing 41 and the left pedal crank 40.

In the mounting step, with reference to the embodiment illustrated in figure 1, the operator screws the right adapter 32 onto the right end of the box 10 and inserts in order the right spacer 36, the right bearing 31, the central spacer 56, the left bearing 41, the left spacer 46 and the left pedal crank 40 onto the shaft 2, from the left end thereof. At this point, the shaft 2 is inserted into the box 10 and the left adapter 42 is screwed onto the left end 12 of the box 10. The screw 60 is then tightened in the threaded hole 61 of the shaft 2. During the tightening of the screw 60, the pedal crank 40 moves on the left end portion 4 of the shaft 2 pushing all of the aforementioned components towards the shoulder 35 formed on the shaft 2 at the right end portion 3 thereof. The clamping ends when the left pedal crank 40 packs together the left spacer 46, the left bearing 41, the central spacer 56, the right bearing 31 and the right spacer 36 against the shoulder 35. It should be noted that for this to be possible, it is necessary for the spacers 36, 46 and 56 to a way as to avoid the shoulder 45 formed in the left pedal crank 40 going into abutment against the left front end face of the shaft 2. The man skilled in the art shall understand that the size of the spacers depends upon the length of the shaft 2 and upon the width of the left pedal crank 40 and that the presence of the right and left spacers 36, 46 is not necessary in the case in which the assembly 1 is sized so that the left pedal crank 40 can go directly into abutment against the inner ring 410 of the left bearing 41 and the right bearing 31 can go directly into abutment against the shoulder 35 formed at the right end portion 3 of the shaft 2.

In an alternative embodiment that is not illustrated, the shaft 2 has a constant diameter along the entire longitudinal extension thereof. The shoulder 35 is therefore not provided and its function is carried out directly by the front end surface of the right pedal crank 30, on which the right spacer 36 or directly the right bearing 31 goes into abutment.

When mounting is completed, the inner rings 310, 410 of the right and left bearings 31, 41 are locked in position on the shaft 2; i.e. any movement of such inner rings is prevented in both ways along a direction parallel to the axis X-X of the shaft 2.

The assembly 1 of figure 1 further comprises an outer spacer 76 substantially cylindrical in shape inserted outside the spacer 56 and having a longitudinal size such as to be able to be arranged in abutment between the left adapter 42 and the outer ring 311 of the right bearing 31. Such an outer ring 311, on the opposite side to said outer spacer 76, is in abutment against an abutment surface 77 formed on the right adapter 32. The outer ring 311 of the right bearing 31 is locked in position by the vice action exerted by the cooperation between the right adapter 32 and the outer spacer 76, which is thrust against the outer ring 311 by the left adapter 42. When mounting is completed, therefore, any movement of the outer ring 311 of the right bearing 31 is prevented in both ways along a direction parallel to the axis X-X of the shaft 2.

As illustrated in figure 1, the right adapter 32 has an end flange 37 having an end portion extending radially outwards and on which an abutment surface 78 adapted to operate in abutment against a right front end surface 13 of the box 10 is defined. Such a flange 37, together with the right bearing 31 having the inner ring 311 locked between the shoulder 35 and the spacer 56 and the outer ring 312 locked between the right adapter 32 and the outer spacer 76, unequivocally determines the position of the assembly 1 with respect to the box 10. Moreover, the locking of the right bearing 31 ensures the correct positioning of the assembly 1 inside the box 10 also in the case of axial overloading.

The left adapter 42, on the other hand, is sized so as to allow the outer ring 411 of the left bearing 41 to move in both ways of the direction parallel to the axis X-X of the shaft 2. The left adapter 42 is screwed onto the left end portion 12 of the box 10 until it thrusts the outer spacer 76 in abutment against the outer ring 311 of the right bearing 31, which in turn is in abutment against the abutment surface 77 formed in the right adapter 32.

The assembly 1 of figure 1 further comprises annular gaskets 36a, 46a arranged between the adapters 32, 42 and the spacers 36, 46 in a position axially outside the bearings 31, 41 to protect such right and left bearings 31, 41 from the external environment.

Figure 2 shows an alternative embodiment of the bottom bracket assembly 1 of the present invention. In such a figure, elements identical to those illustrated and described with reference to figure 1 are indicated with the same reference numeral, whereas corresponding elements are indicated with the same reference numerals increased by 100.

The bottom bracket assembly 1 of figure 2 differs from that of figure 1 in that it comprises adapters 132, 142 mounted canti-levered on the opposite ends 11, 12 of the housing box 10. The bearings 31, 41 are therefore housed outside the box 10.

In this case, unlike the embodiment of figure 1, between the outer rings 311, 411 there is no longer any outer spacer and the adapters 132 and 142 are designed and sized so that the left outer ring 411 of the left bearing 41 is still free to move in the two ways of the direction parallel to the axis X-X of the shaft 2, whereas the outer ring 311 of the right bearing 31 is free to move only towards the outside of the housing box 10. The right adapter 132 therefore comprises, also in this embodiment, an abutment surface 77 for preventing the outer ring 311 of the right bearing 31 from moving towards the inside of the box 10.

The locking of the outer ring 311 of the right bearing 31 in one of the two ways of the direction parallel to the axis X-X of the shaft 2 provides the reference for the positioning of the bottom bracket assembly in the box 10, whereas the freedom of movement of the outer ring 411 of the left bearing 41 in the two ways of the direction parallel to the axis X-X of the shaft 2 allows errors in size of the box 10 to be recovered, even if to a lesser degree with respect to the solution of figure 1.

The assembly of figure 2 also differs from that of figure 1 in that it does not use any spacer between left pedal crank 40 and inner ring 410 of the left bearing 41 and between inner ring of the right bearing 310 and shoulder 35; on the other hand, a central spacer 56 between the inner rings of the two bearings is still used. Between the left pedal crank 40 and inner ring 410 of the left bearing 41 a washer 47 is arranged to better distribute the thrusting action exerted by the left pedal crank 40 and to provide a cylindrical sliding surface for a gasket for protecting the bearing, better described in the rest of the present description. Moreover, in this embodiment the right pedal crank 30 is coupled with the right end portion 3 of the shaft 2 through a threaded coupling like the one described in European patent application n° 05026302 to the same Applicant. However, alternative solutions are foreseen in which left and right spacers are used in a totally similar way to what is described with reference to figure 1. Alternative solutions are also foreseen in which the right pedal crank 30 is coupled with the right end portion 3 of the shaft 2 through couplings of a type different to the threaded one, like for example a grooved coupling or a coupling with square faces of the type described above with reference to figure 1.

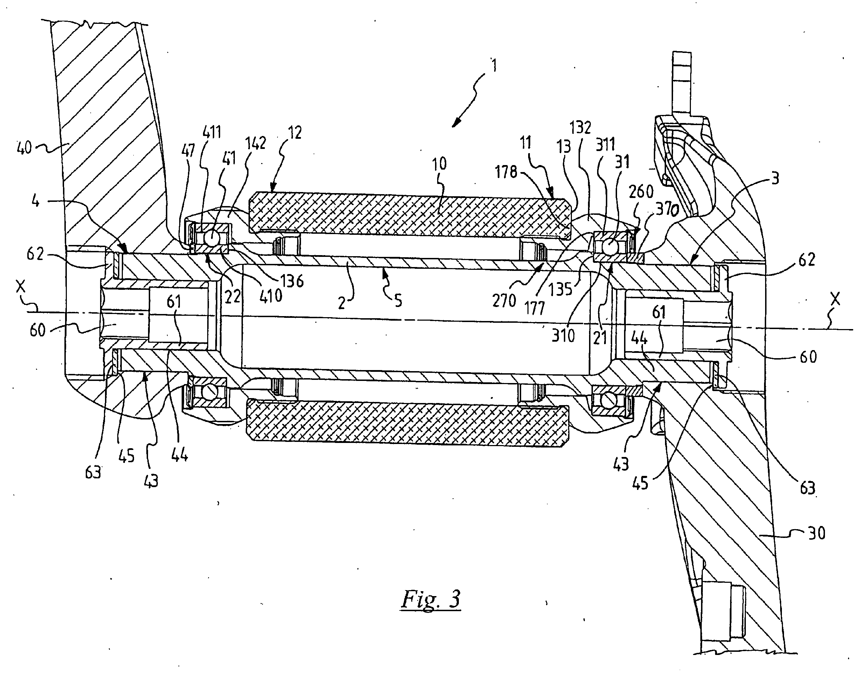

Figure 3 shows a bottom bracket assembly 1 not according to the present invention. In such a figure, elements identical to those illustrated and described with reference to figures 1 and 2 are indicated with the same reference numeral, whereas corresponding elements are indicated with the same reference numerals increased by 100.

The bottom bracket assembly 1 of figure 3 differs from that of figure 2 in that the central spacer between the inner rings 310, 410 of the two bearings 31, 41 is replaced by a pair of shoulders 135, 136 formed integrally on the shaft 2 at the respective free end portions 3 and 4. Moreover, in the assembly of figure 3 the right pedal crank 30 is coupled with the respective end portion 3 of the shaft 2 in a similar way as the left pedal crank 40, i.e. through a shape coupling of the type described above with reference to the left pedal crank 40. In the illustrated embodiment, a right spacer 370 is used between the right pedal crank 30 and the inner ring 310 of the right bearing 31. The spacer 370 can however not be provided in the case in which the body of the right pedal crank 30 is sized in such a way as to go directly in abutment against the right bearing 31.

In the assembly of figure 3, each bearing 31, 41 is inserted onto the shaft 2 from a respective end thereof and is thrust against the respective shoulder 135, 136 by a respective pedal crank 30, 40.

Also in this case, alternative solutions are foreseen in which the right pedal crank 30 is coupled with the end portion 3 of the shaft 2 through shape couplings of a type different to the grooved one, like for example a threaded coupling or a coupling with square faces.

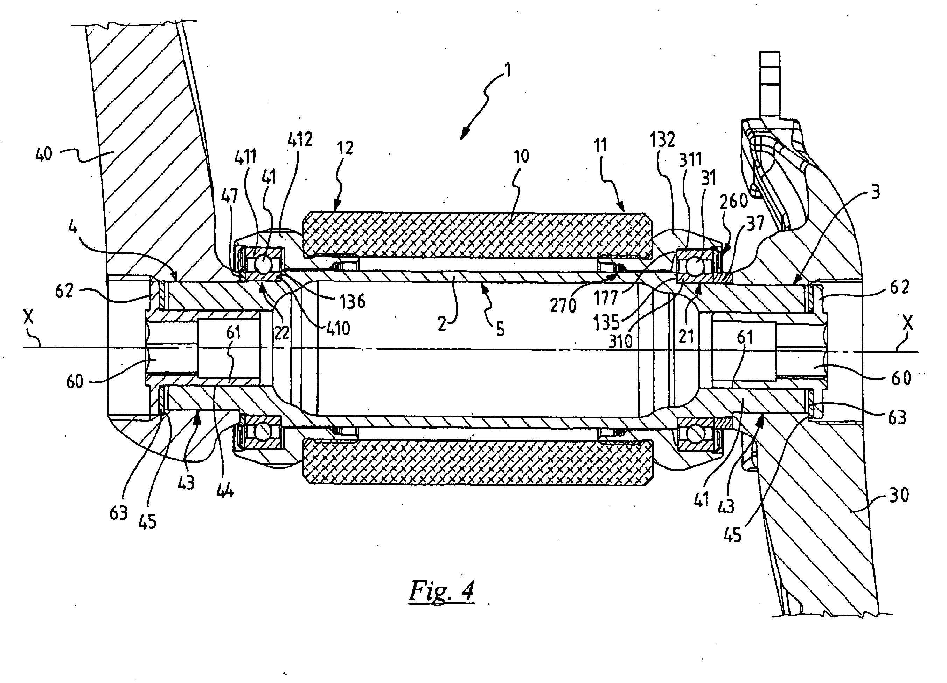

Figure 4 shows bottom bracket assembly 1 not according to the present invention.

The bottom bracket assembly 1 of figure 4 differs from that of figure 3 for the sole reason that the central portion 5 of the shaft 2 has a diameter greater than that of the end portions 3 and 4. In particular, the difference in diameter between the central portion 5 and the end portions 3 and 4 determines the shoulders 135 and 136 for locking the bearings 31, 41.

In the embodiments illustrated in figures 2, 3 and 4, the assembly 1 comprises, at each bearing 31, 41, an outer gasket 260 and an inner gasket 270. The outer gasket 260 insulates the bearings from the external environment, whereas the inner gasket 270 insulates the bearings from the inside of the housing box 10 provided in the bicycle frame.

The gaskets are illustrated in detail in figure 2a, whereas figure 2b shows the section of one of such gaskets, in particular of the inner gasket 270. The gaskets 260, 270 are described only with reference to the right end of the shaft 2, but what is stated is also valid for the left end of the shaft.

The gaskets 260 and 270 are arranged on axially opposite sides with respect to the bearing 31. The outer gasket 260 comprises a rigid support ring 262, preferably metallic, coupled with an annular disc 264 made from elastic material. The disc 264 made from elastic material comprises, at the radial ends thereof, respectively a fin 266, which overlaps outwardly the rigid ring 262, and a curb 268, which surrounds the inner radial surface of the disc 264. The fin 266 is in sliding contact with the inner surface of the adapter 132, whereas the curb 268 is inserted into an annular throat 265 formed on the shaft 2.

The inner gasket 270, illustrated in the detail of figure 2b, also has a rigid support ring 272, preferably metallic, covered, at least partially, by an elastic sheath 274. The inner gasket 270 is inserted in an annular throat 276 formed in the adapter 132, whereas the inner diameter thereof is slightly larger than the diameter of the shaft 2, preferably by one tenth, so as not to contact it and not to generate friction during rotation.

The gaskets 260 and 270 cooperates with the adapter 132 and with the shaft 2 to form a substantially watertight chamber inside which the bearing 31 is contained.

The outer gasket 260 can, moreover, comprise an annular projection adapted to go into contact with the front surface of the pedal crank.

The shaft 2, advantageously, can consist of two cylindrical bodies of the same material arranged coaxially one inside the other. The outer cylindrical body can act as a spacer for the inner rings of the bearings.

Preferably, the pedal cranks 30, 40 of the bottom bracket assembly of the present invention, irrespective of the specific embodiment thereof, are made from metal material, like aluminium alloys or other light alloys. Nevertheless, the possibility of making the pedal cranks from composite material is not excluded.

The composite material can in this case comprise structural fibres incorporated in a polymeric material. Typically, the structural fibres are selected from the group consisting of carbon fibres, glass fibres, aramidic fibres, ceramic fibres, boron fibres and combinations thereof. Carbon fibres are particularly preferred.

The arrangement of said structural fibres in the polymeric material can be a random arrangement of blocks or small sheets of structural fibres, a substantially unidirectional ordered arrangement of fibres, a substantially bidirectional ordered arrangement of fibres or a combination of the above.

Preferably, the polymeric material of the body of the pedal crank is thermosetting and preferably comprises an epoxy resin. Nevertheless, the possibility of using a thermoplastic material is not excluded.

## Claims

1. Bicycle bottom bracket assembly (1), comprising:
- a shaft (2) having a longitudinal axis X-X extending along a predetermined direction and comprising a first end portion (4) and a second end portion (3);
- a first bearing (41) having a first ring (410) inserted on said shaft (2) in a position adjacent to said first end portion (4) and a second ring (411) coupled with a first adapter (42) adapted to be associated with a first end (12) of a housing box (10) of the bottom bracket assembly (1) in a bicycle frame;
- a second bearing (31) having a first ring (310) inserted on said shaft (2) in a position adjacent to said second end portion (3) and a second ring (311) coupled with a second adapter (32) adapted to be associated with a second end (11) of said housing box (10);
- first locking means (30, 40, 35, 36, 46, 56) of said first rings (410, 310) of said first and second bearings (41, 31) acting on said first rings (140, 310) to prevent the movement of said first rings (410, 310) in both ways of said predetermined direction, said first locking means comprising
- a first pedal crank (40) coupled with said first end portion (4) of said shaft (2) by means of first shape coupling to transmit a torque;
wherein at least one adapter (32) of said first and second adapters (42, 32) comprises a first abutment surface (78) adapted to operate in abutment against a front end surface (13) of said housing box (10) and a second abutment surface (77) adapted to operate in abutment against the second ring (311) of at least one bearing (31) between said first and second bearings (41, 31) and wherein the second ring (411) of the other bearing (41) is free to move with respect to the other adapter (42) in both ways of said predetermined direction,
wherein
said first shape coupling comprises coupling surfaces (400), extending parallel to said longitudinal axis X-X, that allow a relative movement of said first pedal crank (40) with respect to said first end portion (4) of said shaft (2), along said predetermined direction,
and wherein said first pedal crank (40) can be locked on said first end portion (4) in a predetermined axial position along said predetermined direction to exert an axial thrust on at least one of said first rings (410, 310) and to transmit the torque
**characterized in that**
said first locking means comprise a first abutment element (35) that is fixed with respect to the shaft (2) and acting on at least one of said first rings (310, 410) on the opposite side to said first pedal crank (40) to lock said at least one of said first rings (310, 410) in axial position on said shaft (2), and **in that**
said first abutment element (35) is defined by a shoulder integrally formed on said shaft (2) opposite to said first pedal crank (40) with respect to said second bearing (31).

2. Bottom bracket assembly (1) according to claim 1, wherein said first ring is the inner ring (310, 410) of the bearing and said second ring is the outer ring (311, 411) of the bearing.

3. Bottom bracket assembly (1), according to claim 1 or 2, further comprising:
- a second pedal crank (30) coupled with said second end portion (3) of said shaft (2);
wherein said second pedal crank (30) is axially mobile with respect to said shaft (2) along said predetermined direction and can be locked on the respective end portion (3) of shaft in a predetermined axial position in which exerts an axial thrust on at least one of said first rings (410, 310) along said predetermined direction to lock at least one of said first and second bearings (41, 31) in axial position with respect to said shaft (2) and to transmit the torque.

4. Bottom bracket assembly (1) according to any claim 1 to 3, wherein said first shape coupling is a grooved coupling.

5. Bottom bracket assembly (1) according to any claim 1 to 3, wherein said first shape coupling is a coupling with square faces.

6. Bottom bracket assembly (1) according to any one of claims 1 to 5, wherein said first locking means further comprise a first spacer (56) inserted on said shaft (2) between said first and second bearings (41, 31) and acting in abutment on the first rings (410, 310) of said first and second bearings (41, 31) and wherein said first abutment element (35) is defined at said second end portion (3) of shaft and acts on the first ring (310) of said second bearing (31) on the opposite side to said first spacer (56) to lock the first rings (410, 310) of said first and second bearings (41, 31) in axial position on said shaft (2).

7. Bottom bracket assembly (1) according to any one of claims 1 to 6, wherein said second pedal crank (30) is integrally formed with said shaft (2).

8. Bottom bracket assembly (1) according to any one of claims 1 to 6, wherein said second pedal crank (30) is associated with said shaft (2) through a forced coupling with interference.

9. Bottom bracket assembly (1) according to any one of claims 1 to 6, wherein said second pedal crank (30) is coupled with said second end portion (3) of shaft through a second shape coupling that allows a relative movement of said second pedal crank (30) with respect to said second end portion (3) of shaft along said predetermined direction.

10. Bottom bracket assembly (1) according to claim 9, wherein said second shape coupling is a grooved coupling.

11. Bottom bracket assembly (1) according to claim 9 or 10, wherein said second shape coupling is a coupling with square faces.

12. Bottom bracket assembly (1) according to any one of the previous claims, wherein said adapters (42, 32) are adapted to be housed inside said housing box (10).

13. Bottom bracket assembly (1) according to claim 12, comprising second locking means (42, 76, 77) of the second ring (311) of said at least one bearing (31) acting on said second ring (311) to prevent the movement of said second ring (311) in both ways of said predetermined direction.

14. Bottom bracket assembly (1) according to claim 13, wherein said second locking means comprise said second abutment surface (77) formed on said at least one adapter (32) and a second spacer (76) acting in abutment on said second ring (311) on the opposite side to said at least one adapter (32), said second spacer (76) being thrust against said second ring (311) by the other adapter (42).

15. Bottom bracket assembly (1) according to claim 14, wherein said at least one adapter (32) comprises a flange (37) on which said first abutment surface (78) is defined.

16. Bottom bracket assembly (1) according to any one of claims 1 to 11, wherein said adapters (142, 132) are adapted to be mounted canti-levered on said housing box (10).

17. Bottom bracket assembly (1) according to claim 16, comprising third locking means of the second ring (311) of said at least one bearing (31) acting on said second ring (311) to prevent the movement of said second ring (311) along said predetermined direction towards the inside of said housing box (10).

18. Bottom bracket assembly (1) according to claim 17, wherein said third locking means comprise said abutment surface (177) for said second ring (311).

19. Bottom bracket assembly (1) according to any one of the previous claims, wherein said shaft (2) comprises a central body portion (5) having a diameter greater than that of said first and second end portions (4, 3).

20. Bottom bracket assembly (1) according to any claim 1 to 10 and claims 12 to 19, wherein said coupling elements (400) comprise a plurality of crests and a plurality of grooves defined by joined curved surfaces.

21. Bottom bracket assembly (1) according to claim 20, wherein the grooves formed on the shaft comprise a tapered axially inner portion (401).

22. Bottom bracket assembly (1) according to any one of the previous claims, further comprising at least one first gasket (260) adapted to protect a respective bearing (31, 41) from the external environment and operatively arranged between a respective adapter (132, 142) and said shaft (2) and at least one second gasket (270) adapted to protect said bearing (31) from the inside of the housing box (10) and operatively arranged between said adapter (132) and said shaft (2).

23. Bicycle bottom bracket assembly (1) according to any one of the previous claim, wherein said shaft (2) comprises a first body having a longitudinal axis X-X extending along a predetermined direction, said first body comprising a first layer of material, and further comprises at least one second layer of material distinct from and lying over said first layer of material to provide abutment surfaces at its ends (3, 4) for respective bearings (31, 41).

24. Bicycle bottom bracket assembly (1) according to claim 23, wherein said first and at least one second layer of the shaft (2) are made from the same material.

25. Bicycle bottom bracket assembly (1) according to claim 23 or 24, wherein said shaft first body is substantially cylindrical and said at least one second layer of material defines at least one second substantially cylindrical body coaxially arranged outside said shaft first body.

26. Bottom bracket assembly (1) according to any of claims 22-25, wherein said first and second gaskets (260, 270) are arranged on opposite sides with respect to said at least one bearing (31, 41).

27. Bottom bracket assembly (1) according to claim 26, wherein said first gasket (260) comprises a first rigid ring (262) coupled with a first annular element (264) made from elastic material.

28. Bottom bracket assembly (1) according to claim 27, wherein said first annular element (264) comprises a radially outer free end having a diameter slightly smaller than the diameter of said adapter (132) and a radially inner free end in contact with said shaft (2).

29. Bottom bracket assembly (1) according to claim 28, wherein said radially inner free end of said first annular element (264) is housed in an annular seat (265) formed on said shaft (2).

30. Bottom bracket assembly (1) according to any one of claims 27 to 29, wherein said first annular element (264) comprises an annular projection adapted to cooperate in abutment with a front wall of a pedal crank.

31. Bottom bracket assembly (1) according to claim 29 or 30, wherein said first annular element (264) comprises, at said radially outer free end, a fin (266) that is placed on top of said first rigid ring (262) and, at said radially inner free end, a curb (268), said first rigid ring (262) being supported by said curb (268).

32. Bottom bracket assembly (1) according to any one of claims 27 to 31, wherein said second gasket (260) comprises a second rigid ring (272) coupled with a second annular element (274) made from elastic material.

33. Bottom bracket assembly (1) according to claim 32, wherein said second annular element (274) comprises a radially outer free end in contact with said adapter (132) and a radially inner free end having a diameter slightly greater than the diameter of said shaft (2).

34. Bottom bracket assembly (1) according to claim 33, wherein a radially outer free end of said second annular element (274) is housed in an annular seat (276) formed on said adapter (132).

35. Bottom bracket assembly (1) according to any one of claims 32 to 34, wherein said second annular element (274) comprises a sheath that, at the radially outer free end of said second annular element (274), at least partially covers said second rigid ring (272).

## Patentansprüche

1. Fahrrad-Tretlageranordnung (1), enthaltend:
- eine Welle (2), die eine Längsachse X-X hat, die sich entlang einer vorbestimmten Richtung erstreckt und einen ersten Endabschnitt (4) sowie einen zweiten Endabschnitt (3) enthält;
- ein erstes Lager (41), das einen ersten Ring (410) hat, der auf der Welle (2) in einer Position benachbart dem ersten Endabschnitt (4) eingefügt ist, und einen zweiten Ring (411), der mit einem ersten Adapter (42) gekoppelt ist, der dazu eingerichtet ist, mit einem ersten Ende (12) eines Gehäusekastens (10) der Tretlageranordnung (1) in einem Fahrradrahmen verbunden zu werden;
- ein zweites Lager (31), das einen ersten Ring (310) hat, der auf der Welle (2) in einer Position benachbart dem zweiten Endabschnitt (3) eingefügt ist, und einen zweiten Ring (311), der mit einem zweiten Adapter (32) gekoppelt ist, der dazu eingerichtet ist, mit einem zweiten Ende (11) des Gehäusekastens (10) verbunden zu werden;
- eine erste Verriegelungseinrichtung (30, 40, 35, 3B, 48, 56) der ersten Ringe (410, 310) des ersten und des zweiten Lagers (41, 31), die auf die ersten Ringe (140, 310) wirkt, um die Bewegung der ersten Ringe (410, 310) beidseitig der vorbestimmten Richtung zu verhindern, wobei die erste Verriegelungseinrichtung enthält:
- eine erste Pedalkurbel (40), die mit dem ersten Endabschnitt (4) der Welle (2) mit Hilfe eines ersten Formschlusses gekoppelt ist, um ein Drehmoment zu übertragen;
wobei wenigstens ein Adapter (32) des ersten und des zweiten Adapters (42, 32) eine erste Anlagefläche (78), die dazu eingerichtet ist, in Anlage an einer vorderen Stirnfläche (13) des Gehäusekastens (10) zu wirken, und eine zweite Anlagefläche (77) hat, die dazu eingerichtet ist, in Anlage an dem zweiten Ring (311) wenigstens eines Lagers (31) zwischen dem ersten und dem zweiten Lager (41, 31) zu wirken, und sich der zweite Ring (411) des anderen Lagers (41) im Bezug auf den anderen Adapter (42) beidseitig der vorbestimmten Richtungen frei bewegen kann,
wobei der erste Formschluss Kopplungsflächen (400) enthält, die sich parallel zu der Längsachse X-X erstrecken und eine Relativbewegung der ersten Pedalkurbel (40) im Bezug auf den ersten Endabschnitt (4) der Welle entlang der vorbestimmten Richtung gestatten,
und die erste Pedalkurbel (40) auf dem ersten Endabschnitt (4) in einer vorbestimmten Achsstellung entlang der vorbestimmten Richtung verriegelt werden kann, um einen axialen Schub auf wenigstens einen der ersten Ringe (410, 310) auszuüben und das Drehmoment zu übertragen,
**dadurch gekennzeichnet, dass** die erste Verriegelungseinrichtung ein erstes Anlageelement (35) enthält, das im Bezug auf die Welle (2) fixiert ist und auf wenigstens einen der ersten Ringe (310, 410) auf der gegenüberliegenden Seite der ersten Pedalkurbel (40) wirkt, um den wenigstens einen der ersten Ringe (310, A10) in einer axialen Position auf der Welle (2) zu verriegeln, und dadurch, dass
das erste Anlageelement (35) durch eine Schulter definiert ist, die auf der Welle (2) gegenüberliegend der ersten Pedalkurbel (40) im Bezug auf das zweite Lager (31) integral ausgebildet ist.

2. Tretlageranordnung (1) nach Anspruch 1, bei der der erste Ring der Innenring (310, 410) des Lagers und der zweite Ring der AufSenring (311, A11) des Lagers ist.

3. Tretlageranordnung (1) nach Anspruch 1 oder 2, weiterhin enthaltend:
- eine zweite Pedalkurbel (30), die mit dem zweiten Endabschnitt (3) der Welle (2) gekoppelt ist;
wobei die zweite Pedalkurbel (30) im Bezug auf die Welle (2) entlang der vorbestimmten Richtung axial beweglich ist und an dem entsprechenden Endabschnitt (3) der Welle in einer vorbestimmten axialen Position verriegelt werden kann, in der sie einen axialen Schub auf wenigstens einen der ersten Ringe (410, 310) entlang der vorbestimmten Richtung ausübt, um das erste und/oder das zweite Lager (41, 31) in axialer Position im Bezug auf die Welle (2) zu verriegeln und das Drehmoment zu übertragen.

4. Tretlageranordnung (1) nach einem der Ansprüche 1 bis 3, bei der der erste Formschluss eine Rillenkopplung ist.

5. Tretlageranordnung (1) nach einem der Ansprüche 1 bis 3, bei der der erste Formschluss eine Kupplung mit quadratischen Flächen ist.

6. Tretlageranordnung (1) nach einem der Ansprüche 1 bis 5, bei der die erste Verriegelungseinrichtung weiterhin einen ersten Abstandshalter (56) enthält, der auf der Welle (2) zwischen dem ersten und dem zweiten Lager (41, 31) eingefügt ist und in Anlage auf die ersten Ringe (410, 310) des ersten und des zweiten Lagers (41, 31) wirkt, wobei das erste Anlageelement (35) an dem zweiten Endabschnitt (3) der Welle definiert ist und auf den ersten Ring (310) des zweiten Lagers (31) auf der gegenüberliegenden Seite des ersten Abstandshalters (56) wirkt, um die ersten Ringe (410, 310) des ersten und des zweiten Lagers (41, 31) in axialer Richtung auf der Welle (2) zu verriegeln.

7. Tretlageranordnung (1) nach einem der Ansprüche 1 bis 6, bei der die zweite Pedalkurbel (30) mit der Welle (2) integral ausgebildet ist.

8. Tretlageranordnung (1) nach einem der Ansprüche 1 bis 6, bei der die zweite Pedalkurbel (30) der Welle (2) durch einen Kraftschluss mit Eingriff verbunden ist.

9. Tretlageranordnung (1) nach einem der Ansprüche 1 bis 6, bei der die zweite Pedalkurbel (30) mit dem zweiten Endabschnitt (3) der Welle durch einen zweiten Formschluss gekoppelt ist, der eine Relativbewegung der zweiten Pedalkurbel (30) im Bezug auf den zweiten Endabschnitt (3) der Welle entlang der vorbestimmten Richtung zulässt.

10. Tretlageranordnung (1) nach Anspruch 9, bei der der zweite Formschluss eine Rillenkopplung ist.

11. Tretlageranordnung (1) nach Anspruch 9 oder 10, bei der der zweite Formschluss eine Kopplung mit quadratischen Flächen ist.

12. Tretlageranordnung (1) nach einem der vorhergehenden Ansprüche, bei der die Adapter (42, 32) dazu eingerichtet sind, in dem Gehäusekasten (10) aufgenommen zu werden.

13. Tretlageranordnung (1) nach Anspruch 12, enthaltend eine zweite Verriegelungseinrichtung (42, 76, 77) des zweiten Ringes (311) des wenigstens einen Lagers (31), die auf den zweiten Ring (311) wirkt, um die Bewegung des zweiten Rings (311) beidseitig der vorbestimmten Richtung zu verhindern.

14. Tretlageranordnung (1) nach Anspruch 13, bei der die zweite Verriegelungseinrichtung die zweite Anlagefläche (77), die auf dem einen Adapter (32) ausgebildet ist, und einen zweiten Abstandhalter (76) enthält, der in Anlage auf den zweiten Ring (311) auf der gegenüberliegenden Seite zu dem wenigstens einen Adapter (32) wirkt, wobei der zweite Abstandhalter (76) gegen den zweiten Ring (311) durch den anderen Adapter (42) geschoben wird.

15. Tretlageranordnung (1) nach Anspruch 14, bei der der wenigstens eine Adapter (32) einen Flansch (37) enthält, auf dem die erste Anlagefläche (78) ausgebildet ist.

16. Tretlageranordnung (1) nach einem der Ansprüche 1 bis 11, bei der die Adapter (142, 132) dazu eingerichtet sind, auskragend an dem Gehäusekasten (10) angebracht zu werden.

17. Tretlageranordnung (1) nach Anspruch 16, enthaltend eine dritte Verriegelungseinrichtung des zweiten Ringes (311) des wenigstens einen Lagers (31), die auf den zweiten Ring (311) wirkt, um die Bewegung des zweiten Ringes (311) entlang der vorbestimmten Richtung hin zur Innenseite des Gehäusekastens (10) zu verhindern.

18. Tretlageranordnung (1) nach Anspruch 17, bei der die dritte Verriegelungseinrichtung die Anlagefläche (177) für den zweiten Ring (311) enthält.

19. Tretlageranordnung (1) nach einem der vorhergehenden Ansprüche, bei der die Welle (2) einen zentralen Körperabschnitt (5) enthält, dessen Durchmesser größer ist als jener des ersten und des zweiten Endabschnittes (4, 3).

20. Tretlageranordnung (1) nach einem der Ansprüche 1 bis 10 und 12 bis 19, bei der die Kopplungselemente (400) eine Vielzahl von Kämmen und eine Vielzahl von Rillen haben, die durch aneinander grenzende gekrümmte Oberflächen ausgebildet sind.

21. Tretlageranordnung (1) nach Anspruch 20, bei der die Rillen, die auf der Welle ausgebildet sind, einen sich verjüngenden, axialen Innenabschnitt (401) haben.

22. Tretlageranordnung (1) nach einem der vorherigen Ansprüche, weiterhin enthaltend wenigstens eine erste Dichtung (260), die dazu eingerichtet ist, ein entsprechendes Lager (31, 41) vor der Außenumgebung zu schützen, und wirkungsmäßig zwischen einem jeweiligen Adapter (132, 142) und der Welle (2) angeordnet ist, und wenigstens eine zweite Dichtung (270), die dazu eingerichtet ist, das Lager (31) vor dem Inneren des Gehäusekastens (10) zu schützen, und wirkungsmäßig zwischen dem Adapter (132) und der Welle (2) angeordnet ist.

23. Fahrrad-Tretlageranordnung (1) nach einem der vorhergehenden Ansprüche, bei der die Welle (2) einen ersten Körper enthält, der eine Längsachse X-X hat, die sich entlang einer vorbestimmten Richtung erstreckt, wobei der erste Körper eine erste Materialschicht und weiterhin wenigstens eine zweite Materialschicht enthält, die sich von der ersten Materialschicht unterscheidet und über dieser liegt, um Anlageflächen an ihren Enden (3, 4) für die entsprechenden Lager (31, 41) bereitzustellen.

24. Fahrrad-Tretlageranordnung (1) nach Anspruch 23, bei der die erste und wenigstens eine zweite Schicht der Welle (2) aus demselben Material bestehen.

25. Fahrrad-Tretlageranordnung (1) nach Anspruch 23 oder 24, bei der der erste Körper der Welle im wesentlichen zylindrisch ist und die wenigstens eine zweite Materialschicht wenigstens einen zweiten, im wesentlichen zylindrischen Körper definiert, der außerhalb des ersten Wellenkörpers koaxial angeordnet ist.

26. Tretlageranordnung (1) nach einem der Ansprüche 22 bis 25, bei der die erste und die zweite Dichtung (260, 270) auf gegenüberliegenden Seiten im Bezug auf das wenigstens eine Lager (31, 41) angeordnet sind.

27. Tretlageranordnung (1) nach Anspruch 26, bei der die erste Dichtung (260) einen ersten starren Ring (262) enthält, der mit einem ersten ringförmigen Element (264) gekoppelt ist, das aus einem elastischen Material besteht.

28. Tretlageranordnung (1) nach Anspruch 27, bei der das erste ringförmige Element (264) ein radial freies Außenende, das einen Durchmesser hat, der geringfügig kleiner ist als der Durchmesser des Adapters (132), und ein radial freies Innenende hat, das mit der Welle (2) in Kontakt steht.

29. Tretlageranordnung (1) nach Anspruch 28, bei der das radial freie Innenende des ersten ringförmigen Elementes (264) in einem ringförmigen Sitz (265) aufgenommen ist, der auf der Welle (2) ausgebildet ist.

30. Tretlageranordnung (1) nach einem der Ansprüche 27 bis 29, bei der das erste ringförmige Element (264) einen ringförmigen Vorsprung enthält, der dazu eingerichtet ist, in Anlage mit einer vorderen Wand einer Pedalkurbel zusammenzuwirken.

31. Tretlageranordnung (1) nach Anspruch 29 oder 30, bei der das erste ringförmige Element (264) an dem radial freien Außenende eine Nase (266), die auf der Oberseite des ersten starren Rings (262) angeordnet ist, und an dem radial freien Innenende eine Einfassung (268) hat, wobei der erste starre Ring (262) von der Einfassung (268) gehalten ist.

32. Tretlageranordnung (1) nach einem der Ansprüche 27 bis 31, bei der die zweite Dichtung (260) einen zweiten starren Ring (272) enthält, der mit einem zweiten ringförmigen Element (274) gekoppelt ist, das aus einem elastischen Material besteht.

33. Tretlageranordnung (1) nach Anspruch 32, bei der das zweite ringförmige Element (274) ein radial freies Außenende, das mit dem Adapter (132) in Kontakt steht, und ein radial freies Innenende enthält, das einen Durchmesser hat, der geringfügig größer als der Durchmesser der Welle (2) ist.

34. Tretlageranordnung (1) nach Anspruch 33, bei der das radial freie Außenende des zweiten ringförmigen Elementes (274) in einem ringförmigen Sitz (276) aufgenommen ist, der auf dem Adapter (132) ausgebildet ist.

35. Tretlageranordnung (1) nach einem der Ansprüche 32 bis 34, bei der das zweite ringförmige Element (274) eine Abschirmung enthält, die an dem radial freien Außenende des zweiten ringförmigen Elementes (274) wenigstens teilweise den zweiten starren Ring (272) abdeckt.

## Revendications

1. Ensemble de jeu de pédalier de bicyclette (1), comprenant :
un arbre (2) présentant un axe longitudinal X-X s'étendant le long d'une direction prédéterminée et comprenant une première partie d'extrémité (4) et une deuxième partie d'extrémité (3) ;
- un premier palier (41) présentant une première bague (410) insérée sur ledit arbre (2) dans une position adjacente à ladite première partie d'extrémité (4) et une deuxième bague (411) reliée à un premier adaptateur (42) conçu pour être associé à une première extrémité (12) d'un boîtier de logement (10) de l'ensemble de jeu de pédalier (1) dans un cadre de bicyclette ;
- un deuxième palier (31) comportant une première bague (310) insérée sur ledit arbre (2) dans une position adjacente à ladite deuxième partie d'extrémité (3) et une deuxième bague (311) reliée à un deuxième adaptateur (32) conçu pour être associé à une deuxième extrémité (11) dudit boîtier de logement (10) ;
- un premier moyen de verrouillage (30, 40, 35, 36, 46, 56) desdites premières bagues (410, 310) desdits premier et deuxième paliers (41, 31) agissant sur lesdites premières bagues (140, 310) afin d'empêcher le mouvement desdites premières bagues (410, 310) dans les deux sens de ladite direction prédéterminée, ledit premier moyen de verrouillage comprenant :
- une première manivelle de pédalier (40) couplée à ladite première partie d'extrémité (4) dudit arbre (2) au moyen d'un premier accouplement de forme afin de transmettre un couple ;
dans lequel au moins un adaptateur (32) parmi lesdits premier et deuxième adaptateurs (42, 32) comprend une première surface de butée (78) conçue pour fonctionner en butée contre une surface d'extrémité avant (13) dudit boîtier de logement (10) et une deuxième surface de butée (77) conçue pour fonctionner en butée contre la deuxième bague (311) d'au moins un palier (31) entre lesdits premier et deuxième paliers (41, 31) et où la deuxième bague (411) de l'autre palier (41) est libre de se déplacer par rapport à l'autre adaptateur (42) dans les deux sens de ladite direction prédéterminée,
où
ledit premier accouplement de forme comprend des surfaces d'accouplement (400), s'étendant parallèlement audit axe longitudinal X-X, qui permettent un mouvement relatif de ladite première manivelle de pédalier (40) par rapport à ladite première partie d'extrémité (4) dudit arbre (2), le long de ladite direction prédéterminée,
et où ladite première manivelle de pédalier (40) peut être verrouillée sur ladite première partie d'extrémité (4) dans une position axiale prédéterminée le long de ladite direction prédéterminée afin d'exercer une poussée axiale sur au moins une bague parmi lesdites premières bagues (410, 310) et afin de transmettre le couple
**caractérisé en ce que**
ledit premier moyen de verrouillage comprend un premier élément de butée (35) qui est fixé par rapport à l'arbre (2) et agissant sur au moins une bague parmi lesdites premières bagues (310, 410) sur le côté opposé à ladite première manivelle de pédalier (40) afin de verrouiller ladite au moins une bague parmi lesdites premières bagues (310, 410) dans une position axiale sur ledit arbre (2), et **en ce que**
ledit premier élément de butée (35) est défini par un épaulement formé de façon solidaire sur ledit arbre (2) de façon opposée à ladite première manivelle de pédalier (40) par rapport audit deuxième palier (31).

2. Ensemble de jeu de pédalier (1) selon la revendication 1, dans lequel ladite première bague est la bague intérieure (310, 410) du palier et ladite deuxième bague est la bague extérieure (311, 411) du palier.

3. Ensemble de jeu de pédalier (1), selon la revendication 1 ou 2 comprenant en outre :
- une deuxième manivelle de pédalier (30) reliée à ladite deuxième partie d'extrémité (3) dudit arbre (2) ;
où ladite deuxième manivelle de pédalier (30) est axialement mobile par rapport audit arbre (2) le long de ladite direction prédéterminée et peut être verrouillée sur la partie d'extrémité respective (3) de l'arbre dans une position axiale prédéterminée dans laquelle une poussée axiale est exercée sur au moins une bague parmi lesdites premières bagues (410, 310) le long de ladite direction prédéterminée pour verrouiller au moins un palier parmi lesdits premier et deuxième paliers (41, 31) dans une position axiale par rapport audit arbre (2) et afin de transmettre le couple.

4. Ensemble de jeu de pédalier (1) selon l'une quelconque des revendications 1 à 3, dans lequel ledit premier accouplement de forme est un accouplement rainuré.

5. Ensemble de jeu de pédalier (1) selon l'une quelconque des revendications 1 à 3, dans lequel ledit premier accouplement de forme est un accouplement avec des faces carrées.

6. Ensemble de jeu de pédalier (1) selon l'une quelconque des revendications 1 à 5, dans lequel ledit premier moyen de verrouillage comprend en outre un premier élément d'espacement (56) inséré sur ledit arbre (2) entre lesdits premier et deuxième paliers (41, 31) et agissant en butée sur les premières bagues (410, 310) desdits premier et deuxième paliers (41, 31) et où ledit premier élément de butée (35) est défini au niveau de ladite deuxième partie d'extrémité (3) d'arbre et agit sur la première bague (310) dudit deuxième palier (31) sur le côté opposé audit premier élément d'espacement (56) afin de verrouiller les premières bagues (410, 310) desdits premier et deuxième paliers (41, 31) dans une position axiale sur ledit arbre (2).

7. Ensemble de jeu de pédalier (1) selon l'une quelconque des revendications 1 à 6, dans lequel ladite deuxième manivelle de pédalier (30) est formée de façon solidaire audit arbre (2).

8. Ensemble de jeu de pédalier (1) selon l'une quelconque des revendications 1 à 6, dans lequel ladite deuxième manivelle de pédalier (30) est associée audit arbre (2) par l'intermédiaire d'un accouplement forcé avec serrage.

9. Ensemble de jeu de pédalier (1) selon l'une quelconque des revendications 1 à 6, dans lequel ladite deuxième manivelle de pédalier (30) est couplée avec ladite deuxième partie d'extrémité (3) d'arbre par l'intermédiaire d'un deuxième accouplement de forme qui permet un mouvement relatif de ladite deuxième manivelle de pédalier (30) par rapport à ladite deuxième partie d'extrémité (3) d'arbre le long de ladite direction prédéterminée.

10. Ensemble de jeu de pédalier (1) selon la revendication 9, dans lequel ledit deuxième accouplement de forme est un accouplement rainuré.

11. Ensemble de jeu de pédalier (1) selon la revendication 9 ou 10, dans lequel ledit deuxième accouplement de forme est un accouplement avec des faces carrée.

12. Ensemble de jeu de pédalier (1) selon l'une quelconque des revendications précédentes, dans lequel lesdits adaptateurs (42, 32) sont conçus pour être logés à l'intérieur dudit boîtier de logement (10).

13. Ensemble de jeu de pédalier (1) selon la revendication 12, comprenant un deuxième moyen de verrouillage (42, 76, 77) de la deuxième bague (311) dudit au moins un palier (31) agissant sur ladite deuxième bague (311) pour empêcher le mouvement de ladite deuxième bague (311) dans les deux sens de ladite direction prédéterminée.

14. Ensemble de jeu de pédalier (1) selon la revendication 13, dans lequel ledit deuxième moyen de verrouillage comprend ladite deuxième surface de butée (77) formée sur ledit au moins un adaptateur (32) et un deuxième élément d'espacement (76) agissant en butée sur ladite deuxième bague (311) sur le côté opposé audit au moins un adaptateur (32), ledit deuxième élément d'espacement (76) étant poussé contre ladite deuxième bague (311) par l'autre adaptateur (42),

15. Ensemble de jeu de pédalier (1) selon la revendication 14, dans lequel ledit au moins un adaptateur (32) comprend une bride (37) sur laquelle ladite première surface de butée (78) est définie.

16. Ensemble de jeu de pédalier (1) selon l'une quelconque des revendications 1 à 11, dans lequel lesdits adaptateurs (142, 132) sont conçus pour être montés en porte-à-faux sur ledit boîtier de logement (10).

17. Ensemble de jeu de pédalier (1) selon la revendication 16, comprenant un troisième moyen de verrouillage de la deuxième bague (311) dudit au moins un palier (31) agissant sur ladite deuxième bague (311) pour empêcher le mouvement de ladite deuxième bague (311) le long de ladite direction prédéterminée vers l'intérieur dudit boîtier de logement (10).

18. Ensemble de jeu de pédalier (1) selon la revendication 17, dans lequel ledit troisième moyen de verrouillage comprend ladite surface de butée (177) destinée à ladite deuxième bague (311).

19. Ensemble de jeu de pédalier (1) selon l'une quelconque des revendications précédentes, dans lequel ledit arbre (2) comprend une partie de corps central (5) présentant un diamètre supérieur à celui desdites première et deuxième parties d'extrémité (4, 3).

20. Ensemble de jeu de pédalier (1) selon l'une quelconque des revendications 1 à 10 et des revendications 12 à 19, dans lequel lesdits éléments d'accouplement (400) comprennent une pluralité de crêtes et une pluralité de rainures définies par des surfaces incurvées réunies,

21. Ensemble de jeu de pédalier (1) selon la revendication 20, dans lequel les rainures fournées sur l'arbre comprennent une partie intérieure axialement inclinée (401).

22. Ensemble de jeu de pédalier (1) selon l'une quelconque des revendications précédentes, comprenant en outre au moins un premier joint (260) conçu pour protéger un palier respectif (31, 41) de l'environnement externe et agencé de manière fonctionnelle entre un adaptateur respectif (132, 142) et ledit arbre (2) et au moins un deuxième joint (270) conçu pour protéger ledit palier (31) de l'intérieur du boitier de logement (10) et agencé de manière fonctionnelle entre ledit adaptateur (132) et ledit arbre (2).

23. Ensemble de jeu de pédalier de bicyclette (1) selon l'une quelconque des revendications précédentes, dans lequel ledit arbre (2) comprend un premier corps présentant un axe longitudinal X-X s'étendant le long d'une première direction prédéterminée, ledit premier corps comprenant une première couche de matériau, et comprend en outre au moins une deuxième couche de matériau distincte de ladite première couche de matériau et reposant sur celle-ci afin de fournir des surfaces de butée au niveau de ses extrémités (3, 4) pour des paliers respectifs (31, 41).

24. Ensemble de jeu de pédalier de bicyclette (1) selon la revendication 23, dans lequel lesdites première et au moins une deuxième couches de l'arbre (2) sont constituées du même matériau.

25. Ensemble de jeu de pédalier de bicyclette (1) selon la revendication 23 ou 24, dans lequel ledit premier corps d'arbre est globalement cylindrique et ladite au moins une deuxième couche de matériau définit au moins un deuxième corps globalement cylindrique agencé co-axialernent à l'extérieur dudit premier corps d'arbre.

26. Ensemble de jeu de pédalier (1) selon l'une quelconque des revendications 22 à 25, dans lequel lesdits premier et deuxième joints (260, 270) sont agencés sur des côtés opposés par rapport audit au moins un palier (31, 41).

27. Ensemble de jeu de pédalier (1) selon la revendication 26, dans lequel ledit premier joint (260) comprend une première bague rigide (262) couplée à un premier élément annulaire (264) constitué d'un matériau élastique.

28. Ensemble de jeu de pédalier (1) selon la revendication 27, dans lequel ledit premier élément annulaire (264) comprend une extrémité libre radialement extérieure présentant un diamètre légèrement inférieur au diamètre dudit adaptateur (132) et une extrémité libre radialement intérieure en contact avec ledit arbre (2).

29. Ensemble de jeu de pédalier (1) la revendication 28, dans lequel ladite extrémité libre radialement intérieure dudit premier élément annulaire (264) est logée dans un siège annulaire (265) formé sur ledit arbre (2).

30. Ensemble de jeu de pédalier (1) selon l'une quelconque des revendications 27 à 29, dans lequel ledit premier élément annulaire (264) comprend une protubérance annulaire conçue pour coopérer en butée avec une paroi avant d'une manivelle de pédalier.

31. Ensemble de jeu de pédalier (1) selon la revendication 29 ou 30, dans lequel ledit premier élément annulaire (264) comprend, au niveau de ladite extrémité libre radialement extérieure, une ailette (266) qui est placée sur le dessus de ladite première bague rigide (262) et, au niveau de ladite extrémité libre radialement intérieure, un rebord (268), ladite première bague rigide (262) étant supportée par ledit rebord (268).

32. Ensemble de jeu de pédalier (1) selon l'une quelconque des revendications 27 à 31, dans lequel ledit deuxième joint (260) comprend une deuxième bague rigide (272) couplée à un deuxième élément annulaire (274) constitué d'un matériau élastique.

33. Ensemble de jeu de pédalier (1) selon la revendication 32, dans lequel ledit deuxième élément annulaire (274) comprend une extrémité libre radialement extérieur en contact avec ledit adaptateur (132) et une extrémité libre radialement intérieure présentant un diamètre légèrement supérieur au diamètre dudit arbre (2).

34. Ensemble de jeu de pédalier (1) selon la revendication 33, dans lequel une extrémité libre radialement extérieure dudit deuxième élément annulaire (274) est logée dans un siège annulaire (276) formé sur ledit adaptateur (132).

35. Ensemble de jeu de pédalier (1) selon l'une quelconque des revendications 32 à 34, dans lequel ledit deuxième élément annulaire (274) comprend une protection qui, au niveau de l'extrémité libre radialement extérieure dudit deuxième élément annulaire (274), recouvre au moins partiellement ladite deuxième bague rigide (272).
